# EUROPEAN PATENT APPLICATION

(11) **EP 4 044 280 A1**
(43) Date of publication of application: **17.08.2022**
(21) Application number: 20873563.9
(22) Date of filing: 06.10.2020
(51) Int. Cl.: H01M 4/36, H01M 4/587

(54) **NEGATIVE ELECTRODE MATERIAL, BATTERY, NEGATIVE ELECTRODE MATERIAL MANUFACTURING METHOD, AND BATTERY MANUFACTURING METHOD**

(30) Priority: 09.10.2019 JP 2019185985
(71) Applicant: Mitsubishi Materials Corporation, Tokyo 100-8117 (JP)
(72) Inventor: RIKITA, Naoki, Tokyo 100-8117 (JP); TANG, Jie, Tsukuba-shi, Ibaraki 305-0047 (JP)
(74) Representative: Gille Hrabal Partnerschaftsgesellschaft mbB Patentanwälte
(86) International application number: PCT/JP2020/037906
(87) International publication number: WO 2021/070830

(57) **Abstract**

Tungsten trioxide is appropriately disposed on the surface of carbon. A negative-electrode material is a negative-electrode material for a battery and contains amorphous carbon and tungsten trioxide provided on the surface of the amorphous carbon.

## Description

### Field

The present invention relates to a negative-electrode material, a battery, a negative-electrode-material manufacturing method, and a battery manufacturing method.

### Background

Carbon is used as a negative-electrode material for a lithium-ion secondary battery in some cases. For example, Patent Literature 1 discloses a negative electrode in which tungsten trioxide is disposed on the surface of graphite. It is possible to improve diffusivity of lithium ion by disposing tungsten trioxide on the surface of graphite and thus improve a battery characteristic such as capacity.

### Citation List

### Patent Literature

Patent Literature 1: Japanese Patent Application Laid-open No. 2018-45904

### Summary

### Technical Problem

However, there is room for improvement in appropriate disposition of tungsten trioxide on the surface of carbon in such a negative-electrode material.

The present invention is made in view of the above description and intended to provide a negative-electrode material, a battery, a negative-electrode-material manufacturing method, and a battery manufacturing method that are capable of appropriately disposing tungsten trioxide on the surface of carbon.

### Solution to Problem

To solve the problem and achieve the object above, a negative-electrode material for a battery of the present disclosure comprising: amorphous carbon; and tungsten trioxide provided on the surface of the amorphous carbon.

In the negative-electrode material of the present disclosure, it is preferable that the tungsten trioxide has a hexagonal crystal structure.

In the negative-electrode material of the present disclosure, it is preferable that the tungsten trioxide has at least one of monoclinic and triclinic crystal structures.

In the negative-electrode material of the present disclosure, it is preferable that the amorphous carbon includes a functional group at the surface. It is preferable that the negative-electrode material of the present disclosure comprising no graphite.

To solve the problem and achieve the object above, a battery of the present disclosure comprising the negative-electrode material and a positive electrode material.

To solve the problem and achieve the object above, a method of manufacturing a negative-electrode material for a battery of the present disclosure comprising: a dissolution step of dissolving tungsten trioxide by adding the tungsten trioxide to dissolution solution; an addition step of adding amorphous carbon to the dissolution solution, in which the tungsten trioxide is dissolved, to produce additive solution; and a negative-electrode-material production step of producing a negative-electrode material by removing a liquid component in the additive solution.

In the negative-electrode-material manufacturing method of the present disclosure, it is preferable that the ratio of the amount of the added tungsten trioxide relative to the sum of the amount of the added tungsten trioxide and the amount of the added amorphous carbon is larger than 2 weight% and equal to or smaller than 8 weight%.

In the negative-electrode-material manufacturing method of the present disclosure, it is preferable that the added tungsten trioxide has an average particle size of equal to or larger than 100 nm and equal to or smaller than 20 µm.

In the negative-electrode-material manufacturing method of the present disclosure, it is preferable that the negative-electrode-material production step includes a dry step of drying the additive solution to produce a negative-electrode intermediate, and a heating step of heating the negative-electrode intermediate.

In the negative-electrode-material manufacturing method of the present disclosure, it is preferable that alkaline solution is used as the dissolution solution at the dissolution step.

To solve the problem and achieve the object above, a method of manufacturing a battery of the present disclosure comprising: the negative-electrode-material manufacturing method and a step of manufacturing a positive electrode material.

### Advantageous Effects of Invention

According to the present invention, it is possible to appropriately dispose tungsten trioxide on the surface of carbon.

### Brief Description of Drawings

FIG. 1 is a schematic partial cross-sectional view of a battery according to the present embodiment.
FIG. 2 is a schematic cross-sectional view of a negative electrode according to the present embodiment.
FIG. 3 is a flowchart for description of a battery manufacturing method of the present embodiment.
FIG. 4 illustrates images that capture negative-electrode materials in examples of the present invention.
FIG. 5 illustrates images that capture negative-electrode materials in examples of the present invention
FIG. 6 is an image that captures a negative-electrode material in a comparative example.
FIG. 7 is a diagram illustrating capacity measurement results of negative electrodes made of negative-electrode materials of the present embodiment.
FIG. 8 is a diagram illustrating capacity measurement results of negative electrodes made of negative-electrode materials of the present embodiment.
FIG. 9 is a diagram illustrating a capacity measurement result of a negative electrode made of a negative-electrode material of the present embodiment.
FIG. 10 is a diagram illustrating a capacity measurement result of a negative electrode made of a negative-electrode material of the present embodiment.
FIG. 11 is a diagram illustrating a capacity measurement result of a negative electrode made of a negative-electrode material of the present embodiment.
FIG. 12 is a diagram illustrating a capacity measurement result of a negative electrode made of a negative-electrode material of the present embodiment.
FIG. 13 is a diagram illustrating a capacity measurement result of a negative electrode made of a negative-electrode material of the present embodiment.
FIG. 14 is a diagram illustrating a capacity measurement result of a negative electrode made of a negative-electrode material of the present embodiment.
FIG. 15 is a diagram illustrating a capacity measurement result of a negative electrode made of a negative-electrode material of the comparative example. Description of Embodiments

The present invention will be described below in detail with reference to the accompanying drawings. Note that, the present invention is not limited by a mode for carrying out the invention (hereinafter referred to as an embodiment) described below. Constituent components in the embodiment described below include those that can be easily thought of by the skilled person in the art, those identical in effect, and what is called equivalents. Moreover, constituent components disclosed in the embodiment described below may be combined as appropriate.

### (Battery)

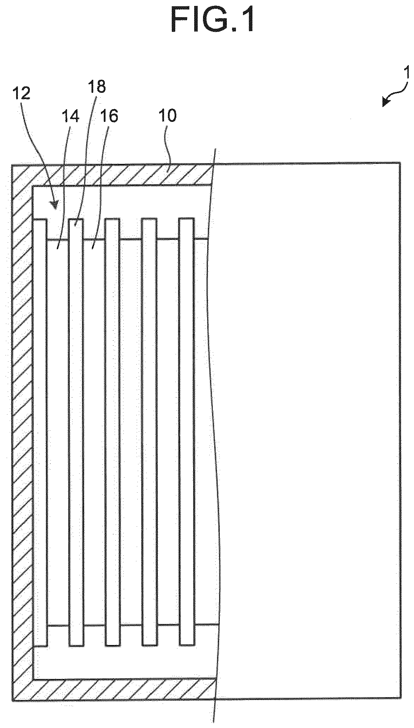

FIG. 1 is a schematic partial cross-sectional view of a battery according to the present embodiment. This battery 1 according to the present embodiment is a lithium-ion secondary battery. The battery 1 includes a casing 10, an electrode group 12, and non-illustrated electrolytic solution. The casing 10 is a case in which the electrode group 12 and the electrolytic solution are housed. The casing 10 may include wires and terminals connected to the electrode group 12 in addition to the electrode group 12.

The electrode group 12 includes a negative electrode 14, a positive electrode 16, and a separator 18. The electrode group 12 has a configuration in which the separator 18 is disposed between the negative electrode 14 and the positive electrode 16. In the example illustrated in FIG. 1, the electrode group 12 has what is called a layering-type electrode group structure in which the negative electrode 14 having a rectangular shape and the positive electrode 16 having a rectangular shape are alternately layered with the separator 18 having a rectangular shape interposed therebetween. However, the electrode group 12 is not limited to a layering-type electrode group structure. For example, the electrode group 12 may have a winding-type electrode group structure in which the negative electrode 14 having a strip shape and the positive electrode 16 having a strip shape are layered and wound with the separator 18 having a strip shape interposed therebetween.

### (Negative electrode)

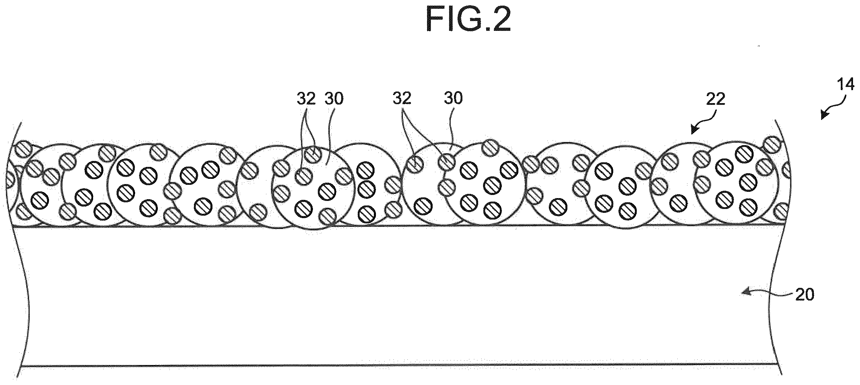

FIG. 2 is a schematic cross-sectional view of the negative electrode according to the present embodiment. As illustrated in FIG. 2, the negative electrode 14 includes a current-collecting layer 20 and a negative-electrode material layer 22. The current-collecting layer 20 is made of a conductive member. The conductive member of the current-collecting layer 20 is, for example, copper. The negative-electrode material layer 22 contains a negative-electrode material according to the present embodiment. The negative-electrode material layer 22 is provided on the surface of the current-collecting layer 20. The thickness of the current-collecting layer 20 may be, for example, equal to or larger than 15 µm and equal to or smaller than 40 µm approximately, and the thickness of the negative-electrode material layer 22 may be, for example, equal to or larger than 20 µm and equal to or smaller than 200 µm approximately.

The negative-electrode material layer 22 contains a negative-electrode material. The negative-electrode material contains amorphous carbon and tungsten trioxide provided on the surface of the amorphous carbon. More specifically, the negative-electrode material of the negative-electrode material layer 22 contains an amorphous carbon particle 30 as a particle of the amorphous carbon, and a WO₃ (tungsten trioxide) particle 32 as a particle of the tungsten trioxide. Note that, the shape of such a particle is not limited to a spherical shape or the like but may be any other optional shape such as a linear shape or a sheet shape.

The negative-electrode material of the negative-electrode material layer 22 contains a plurality of amorphous carbon particles 30. Amorphous carbon is non-crystalline carbon, which has no crystal structure, and has neither a planar crystal structure such as a graphite structure nor a diamond crystal structure. Amorphous carbon is also called diamond-like carbon and can be described as carbon in mixture of sp2 coupling and sp3 coupling.

It is preferable that each amorphous carbon particle 30 is entirely made of amorphous carbon and contains no component other than amorphous carbon except for inevitable impurities. Specifically, each amorphous carbon particle 30 preferably contains no graphite.

The average particle size of the amorphous carbon particles 30 is preferably equal to or larger than 1 µm and equal to or smaller than 50 µm, more preferably equal to or larger than 1 µm and equal to or smaller than 20 µm. The strength of an electrode film can be maintained when the average particle size is in this range.

The negative-electrode material of the negative-electrode material layer 22 contains a plurality of WO₃ particles 32. The WO₃ particles 32 are each provided on the surface of an amorphous carbon particle 30. More specifically, a plurality of WO₃ particles 32 are provided on each amorphous carbon particle 30. The WO₃ particles 32 each is closely attached to (contact) the surface of an amorphous carbon particle 30, in other words, the WO₃ particle 32 and the amorphous carbon particle 30 are in a composite state. The composite state means a state in which the WO₃ particle 32 cannot be separated from the amorphous carbon particle 30 at least when no external force acts.

The WO₃ particles 32 include those having a hexagonal crystal structure and those having monoclinic and triclinic crystal structures. In other words, the negative-electrode material contains tungsten trioxide having a hexagonal crystal structure and tungsten trioxide having monoclinic and triclinic crystal structures. However, the negative-electrode material may contain at least one of tungsten trioxide having a hexagonal crystal structure, tungsten trioxide having a monoclinic crystal structure, and tungsten trioxide having a triclinic crystal structure. In summary, the negative-electrode material preferably contains at least one of hexagonal, monoclinic, and triclinic crystalline tungsten trioxides, more preferably contains hexagonal crystalline tungsten trioxide and monoclinic or triclinic crystalline tungsten trioxide, further more preferably contains hexagonal, monoclinic, and triclinic crystalline tungsten trioxides. Note that, when the negative-electrode material contains, in addition to hexagonal crystalline tungsten trioxide, tungsten trioxide having another crystal structure such as a monoclinic or triclinic crystal structure, the contained amount of hexagonal crystalline tungsten trioxide is preferably largest among tungsten trioxides having those crystal structures. However, the crystal structure of tungsten trioxide contained in the negative-electrode material is not limited thereto, but for example, tungsten trioxide having another crystal structure may be contained. The negative-electrode material may contain non-crystalline tungsten trioxide.

The average particle size of the WO₃ particles 32 is smaller than the average particle size of the amorphous carbon particles 30. The average particle size of the WO₃ particles 32 is preferably equal to or larger than 100 nm and equal to or smaller than 20 µm, more preferably equal to or larger than 100 nm and equal to or smaller than 1 µm.

In this manner, the negative-electrode material has a structure in which each particle of tungsten trioxide (WO₃ particle 32) is provided on the surface of an amorphous carbon particle 30, but is not limited thereto. The negative-electrode material may have any structure in which tungsten trioxide is provided on the surface of amorphous carbon, and the shape of tungsten trioxide provided on the surface of amorphous carbon may be optional.

Note that, the negative-electrode material layer 22 may contain a material other than the negative-electrode material (the amorphous carbon particles 30 and the WO₃ particles 32). The negative-electrode material layer 22 may contain, for example, binder. The material of the binder may be optional and examples of the material include polyvinylidene fluoride (PVDF), carboxy methyl cellulose (CMC), styrene butadiene rubber (SBR), and polyacrylic acid (PAA). Only one kind of binder may be used or two or more kinds of binder may be used in combination. However, the negative-electrode material layer 22, in other words, the negative-electrode material preferably contains no graphite.

Identification of amorphous carbon and tungsten trioxide may be performed by an X-ray diffraction method. Because a peak waveform of the analysis target object in an X-ray diffraction analysis result indicates the peak waveform of carbon, it can be determined, for example, that an analysis target object is amorphous carbon when the (002) peak waveform in a known graphite structure is broad. For example, it can be determined that an analysis target object contains tungsten trioxide when a position (angle) indicating a peak in an X-ray diffraction analysis result of the analysis target object matches a position indicating a peak in known tungsten trioxide.

It can be checked that the WO₃ particles 32 are each disposed on the surface of an amorphous carbon particle 30 by observation through an electron microscope such as a scanning electron microscope (SEM) or a transmission electron microscope (TEM).

An average particle size in the present embodiment means the average of primary particle sizes (the diameters of particles). The average particle size may be measured by an optional method, and for example, may be measured by using a SEM picture.

### (Positive electrode)

The positive electrode 16 includes a current-collecting layer and a positive electrode material layer. The current-collecting layer of the positive electrode 16 is made of a conductive member such as aluminum. The positive electrode material layer is a layer of a positive electrode material and provided on the surface of the current-collecting layer of the positive electrode 16. The thickness of the current-collecting layer of the positive electrode may be, for example, equal to or larger than 10 µm and equal to or smaller than 30 µm approximately, and the thickness of the positive electrode material layer may be, for example, equal to or larger than 10 µm and equal to or smaller than 100 µm approximately.

The positive electrode material layer contains a positive electrode material. The positive electrode material contains particles of a lithium compound, which is a compound containing lithium. The lithium compound may be, for example, lithium-containing metallic oxide or lithium-containing phosphate. More specifically, the lithium compound is, for example, LiCoO₂, LiNiO₂, LiMnO₂, LiMn₂O₄, LiNiₐCo_{b}Mn_{c}O₂ (where 0 < a < 1, 0 < b < 1, 0 < c < 1, and a + b + c = 1), or LiFePO₄. The lithium compound may contain only one kind of material or may contain two kinds or more of material. The positive electrode material layer may contain a material other than the positive electrode material, and for example, may contain binder. The material of the binder may be optional and examples of the material include polyvinylidene fluoride (PVDF), polytetrafluoroethylene (PTFE), and PAA. Only one kind of binder may be used or two or more kinds of binder may be used in combination.

### (Separator)

The separator 18 is an insulating member. In the present embodiment, the separator 18 is, for example, a porous film made of resin such as polyethylene (PE) or polypropylene (PP). The separator 18 may have a structure in which films of different materials are layered. The separator 18 may include a heat-resistant layer. The heat-resistant layer is a layer containing a high-melting-point material. The heat-resistant layer may contain particles of an inorganic material such as alumina.

### (Electrolytic solution)

The electrolytic solution provided in the battery 1 is non-aqueous electrolytic solution. The electrolytic solution is impregnated in a void space in the electrode group 12. The electrolytic solution contains, for example, lithium salt and an aprotic solvent. The lithium salt is dispersed and dissolved in the aprotic solvent. Examples of the lithium salt include LiPF₆, LiBF₄, Li[N(FSO₂)₂], Li[N(CF₃SO₂)₂], Li[B(C₂O₄)₂] , and LiPO₂F₂. The aprotic solvent may be, for example, a composite of cyclic carbonate and the chain carbonate. Examples of the cyclic carbonate include EC, PC, and butylene carbonate. Examples of the chain carbonate include dimethyl carbonate (DMC), ethyl methyl carbonate (EMC), and diethyl carbonate (DEC).

### (Battery manufacturing method)

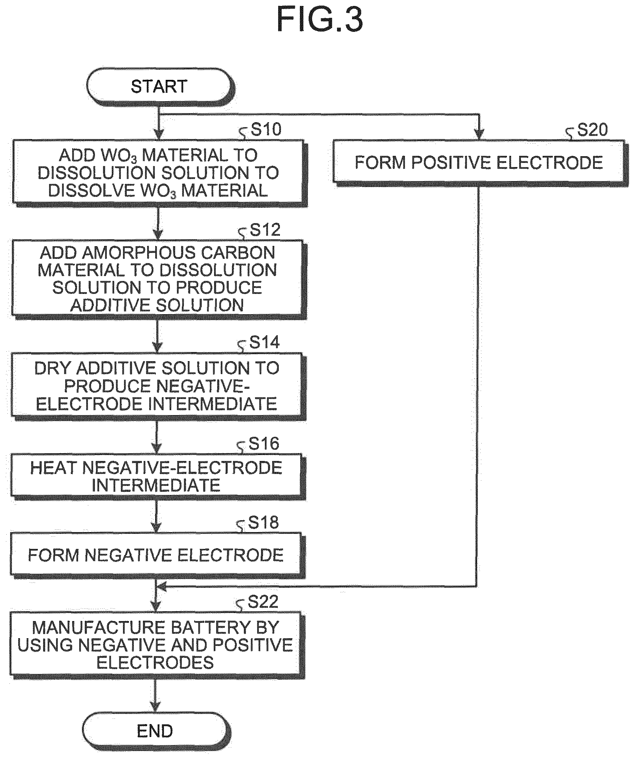

Subsequently, a method of manufacturing the battery 1 according to the present embodiment will be described. FIG. 3 is a flowchart for description of the battery manufacturing method of the present embodiment. As illustrated in FIG. 3, the negative electrode 14 is formed through a process of steps S10 to S16 in the present manufacturing method.

Specifically, a WO₃ material is added to dissolution solution to dissolve the WO₃ material in the dissolution solution (step S10; dissolution step). The WO₃ material is tungsten trioxide used as the material of the negative-electrode material. The average particle size of the WO₃ material is preferably, for example, equal to or larger than 100 nm and equal to or smaller than 20 µm, more preferably equal to or larger than 100 nm and equal to or smaller than 1 µm. The dissolution solution is solution into which the WO₃ material, in other words, tungsten trioxide can be dissolved. The dissolution solution is, for example, alkaline solution, and is ammonia water solution in the present embodiment. The concentration of ammonia relative to the entire dissolution solution is preferably 5% to 30% inclusive in weight%.

The WO₃ material is manufactured by, for example, subjecting CaWO₄ to dissolution with ammonia after reaction with hydrochloric acid, and then firing with crystallized ammonium paratungstate, but may be manufactured by an optional method.

At step S10, the ratio of the amount of the added WO₃ material relative to the amount of ammonia contained in the dissolution solution is preferably 1% to 10% inclusive in mol%. The amount of tungsten trioxide in the dissolution solution is sufficient when the ratio of the amount of the added WO₃ material is equal to or larger than 1%, and tungsten trioxide is prevented from remaining without dissolving when the ratio of the amount of the added WO₃ material is equal to or smaller than 10%. In addition, at step S10, the WO₃ material is added to the dissolution solution and agitated for a predetermined time to dissolve the WO₃ material in the dissolution solution. The predetermined time is preferably 6 hours to 24 hours. The WO₃ material can be appropriately dissolved into the dissolution solution by setting the predetermined time to be 6 hours or longer, and a too long manufacturing time can be avoided by setting the predetermined time to be 24 hours or shorter.

Subsequently, an amorphous carbon material is added to the dissolution solution (in this example, ammonium tungstate solution), in which the WO₃ material is dissolved, to produce additive solution (step S12; addition step). The amorphous carbon material is amorphous carbon used as a material. The average particle size of the amorphous carbon material is preferably, for example, equal to or larger than 1 µm and equal to or smaller than 50 µm, more preferably equal to or larger than 1 µm and equal to or smaller than 20 µm. High capacity of the battery can be obtained when the average particle size of the amorphous carbon material is in this range.

The amorphous carbon material may be manufactured by, for example, an oil furnace method. In the oil furnace method, for example, material oil is sprayed into a high-temperature atmosphere and thermally decomposed and then rapidly cooled, thereby manufacturing particles of the amorphous carbon material. However, the method of manufacturing the amorphous carbon material is not limited thereto but may be optional.

A WO₃ material addition ratio is defined to be the ratio of the amount of the added WO₃ material relative to the sum of the amount of the added WO₃ material and the amount of the added amorphous carbon material, when the WO₃ material and the amorphous carbon material are added to the dissolution solution. In the present manufacturing method, the WO₃ material addition ratio is larger than 2% and equal to or smaller than 8% in weight%. In the present manufacturing method, the WO₃ material addition ratio is preferably 4% to 8% inclusive, more preferably 5% to 8% inclusive, in weight%. High capacity of the battery as the negative electrode can be obtained when the WO₃ material addition ratio is in this range so that the WO₃ particles 32 are each appropriately formed on the surface of an amorphous carbon particle 30.

At step S12, the dissolution solution, in other words, the additive solution, in which the WO₃ material is dissolved and to which the amorphous carbon material is added is agitated to disperse the amorphous carbon material in the additive solution. In addition, at step S12, surfactant may be added to the additive solution to improve the affinity between the amorphous carbon material and WO₃. The surfactant may be sodium dodecyl sulfate (SDS). The amount of the added surfactant is preferably larger than 2% and equal to or smaller than 8% in weight% relative to the amount of the added WO₃ material in the dissolution solution. With this value range, the affinity between the amorphous carbon material and WO₃ is appropriately improved.

Subsequently, a liquid component in the additive solution is removed to produce the negative-electrode material (negative-electrode-material production step). In the present embodiment, steps S14 and S16 are executed as the negative-electrode-material production step. Specifically, the additive solution is dried to produce a negative-electrode intermediate (step S14; dry step). At step S14, the additive solution is dried at 80°C in air for 12 hours to remove, in other words, evaporate the liquid component contained in the additive solution. The negative-electrode intermediate contains a solid component remaining after the liquid component in the additive solution is removed.

Subsequently, the negative-electrode intermediate is heated to produce the negative-electrode material (step S16; heating step). The negative-electrode material in which the WO₃ particles 32 are each provided on the surface of an amorphous carbon particle 30 is formed as the negative-electrode intermediate is heated. Temperature at which the negative-electrode intermediate is heated is preferably 500°C to 900°C inclusive. The negative-electrode material can be appropriately formed when the heating temperature of the negative-electrode intermediate is in this range. The time for which the negative-electrode intermediate is heated is preferably 1 to 10 hours inclusive. The negative-electrode material can be appropriately formed when the heating time of the negative-electrode intermediate is in this range.

Subsequently, the negative electrode 14 is formed by using the formed negative-electrode material (step S18). Specifically, the negative electrode 14 is formed by forming the negative-electrode material layer 22 containing the negative-electrode material on the surface of the current-collecting layer 20.

In addition, the present manufacturing method forms the positive electrode 16 (step S20). At step S20, the positive electrode material is formed by a method same as that at steps S10 to S16 except that a lithium compound material as the lithium compound is used in place of the amorphous carbon material. Then, the positive electrode 16 is formed by forming the positive electrode material layer containing the positive electrode material on the surface of the current-collecting layer for the positive electrode 16.

After the negative electrode 14 and the positive electrode 16 are formed, the battery 1 is manufactured by using the negative electrode 14 and the positive electrode 16 (step S22). Specifically, the battery 1 is manufactured by layering the negative electrode 14, the separator 18, and the positive electrode 16 to form the electrode group 12 and housing the electrode group 12 and the electrolytic solution in the casing 10.

In this manner, in the present embodiment, the negative-electrode material is manufactured by adding amorphous carbon to the dissolution solution, in which tungsten trioxide is dissolved, and then removing the liquid component, as described at steps S10 to S16. Hereinafter, such a negative-electrode-material manufacturing method is also referred to as a solution method. However, the negative-electrode-material manufacturing method of the present embodiment is not limited to the solution method. For example, a method using a ball mill, a spray-dry method, a CVD method, or the like may be used in place of the solution method to manufacture the negative-electrode material. The method using a ball mill is a method that manufactures the negative-electrode material by adding amorphous carbon and tungsten trioxide into the ball mill and rotating the ball mill at a predetermined rotational speed for a predetermined time. The spray-dry method is a method that manufactures the negative-electrode material by adding amorphous carbon to the dissolution solution, in which tungsten trioxide is dissolved, and spray-drying the dissolution solution. The CVD method is a method that manufactures the negative-electrode material by drying the dissolution solution, in which tungsten trioxide is dissolved, putting the dried dissolution solution into a CVD furnace together with amorphous carbon, and performing chemical vapor deposition at a predetermined temperature. Similarly, the positive-electrode-material manufacturing method is not limited to the solution method but may be an optional method such as the method using a ball mill, the spray-dry method, or the CVD method.

As described above, the negative-electrode material for the battery according to the present embodiment contains amorphous carbon and tungsten trioxide provided on the surface of the amorphous carbon. A battery characteristic such as capacity can be improved by providing the tungsten trioxide on the surface of the carbon in the negative-electrode material according to the present embodiment. In a negative-electrode material in which tungsten trioxide is provided on the surface of carbon, it is required to appropriately dispose the tungsten trioxide on the surface of the carbon. The characteristic of the battery cannot be appropriately improved when the tungsten trioxide cannot be appropriately disposed on the surface of the carbon, in other words, when the tungsten trioxide is not provided on the surface of the carbon or the tungsten trioxide is separated from the surface of the carbon. However, in the negative-electrode material according to the present embodiment, amorphous carbon, which is non-crystalline, is used as the carbon, and tungsten trioxide is provided on the surface of the amorphous carbon. In processing of disposing the tungsten trioxide on the surface of the amorphous carbon, a functional group (for example, hydroxyl radical or carboxyl radical) may be provided at the surface. With the functional group, it is possible to appropriately trap the tungsten trioxide in the surface of the amorphous carbon, thereby appropriately disposing the tungsten trioxide on the surface. Moreover, with the functional group, the tungsten trioxide can highly closely contact the surface of the amorphous carbon, which prevents the tungsten oxide from being separated from the surface of the carbon. Thus, in the negative-electrode material according to the present embodiment, the tungsten trioxide can be appropriately disposed on the surface of the carbon. In particular, when the negative-electrode material in which tungsten trioxide is provided on the surface of amorphous carbon as in the present embodiment is used, capacity at charging and discharging with high current can be improved, and accordingly, the characteristic of the battery can be improved. Since the amorphous carbon material is manufactured at temperature lower than, for example, that for graphite, in particular, it is likely that the functional group is not removed but remains, and accordingly, the tungsten trioxide can be appropriately disposed on the surface.

In the negative-electrode material according to the present embodiment, the tungsten trioxide preferably has a hexagonal crystal structure and preferably has at least one of monoclinic and triclinic crystal structures. The tungsten trioxide can be appropriately disposed on the surface of the amorphous carbon by providing the tungsten trioxide of hexagonal, monoclinic, or triclinic crystal structures on the surface of the carbon.

The negative-electrode material according to the present embodiment preferably contains no graphite. The tungsten trioxide can be appropriately disposed on the surface of the amorphous carbon by using the carbon without containing graphite.

The negative-electrode-material manufacturing method according to the present embodiment includes the dissolution step, the addition step, and the negative-electrode-material production step. At the dissolution step, tungsten trioxide (tungsten trioxide material) is added to the dissolution solution and dissolved. At the addition step, amorphous carbon (amorphous carbon material) is added to the dissolution solution, in which the tungsten trioxide is dissolved, to produce additive solution. At the negative-electrode-material production step, a negative-electrode material is produced by removing a liquid component in the additive solution. In this manner, according to the negative-electrode manufacturing method according to the present embodiment, the tungsten trioxide can be appropriately disposed on the surface of the amorphous carbon by adding the carbon to the dissolution solution, in which the tungsten trioxide is dissolved, to manufacture the negative-electrode material.

In the negative-electrode-material manufacturing method according to the present embodiment, the ratio of the amount of the added tungsten trioxide relative to the sum of the amount of the added tungsten trioxide and the amount of the added amorphous carbon is preferably larger than 2 weight% and equal to or smaller than 8 weight%. The characteristic of the battery as the negative electrode can be improved when the amount of the added tungsten trioxide is in this range so that the tungsten trioxide is appropriately formed on the surface of the amorphous carbon.

In the negative-electrode-material manufacturing method according to the present embodiment, the added tungsten trioxide preferably has an average particle size equal to or larger than 100 nm and equal to or smaller than 20 µm. The characteristic of the battery as the negative electrode can be improved by using the tungsten trioxide having such a particle size so that the tungsten trioxide is appropriately formed on the surface of the amorphous carbon.

The negative-electrode-material production step preferably includes the dry step of drying the additive solution to produce a negative-electrode intermediate and the heating step of heating the negative-electrode intermediate. The characteristic of the battery as the negative electrode can be improved when a negative-electrode material is produced by heating the negative-electrode intermediate formed by drying the additive solution so that the tungsten trioxide is appropriately formed on the surface of the amorphous carbon.

At the dissolution step, alkaline solution is preferably used as the dissolution solution. The tungsten trioxide can be appropriately dissolved when the alkaline solution is used.

### (Examples)

### (Manufacturing conditions)

Subsequently, examples will be described. In Examples 1 and 2, a negative-electrode material was manufactured by using amorphous carbon and tungsten trioxide by the solution method described in the embodiment. Specifically, 5 ml of ammonia solution at a concentration of 28% and the WO₃ material were added into a beaker having a 50 ml capacity and agitated for 12 hours to dissolve the WO₃ material in the ammonia solution. Then, the amorphous carbon material and 5 ml of pure water were added to the ammonia solution. In addition, SDS is added to the ammonia solution so that the weight ratio of the SDS and the WO₃ material is 1:1. Then, the ammonia solution was agitated and then dried to produce a negative-electrode intermediate. Then, the negative-electrode intermediate was introduced into a tubal furnace and heated at 700°C for two hours in an argon atmosphere, thereby manufacturing the negative-electrode material.

In Example 1, the WO₃ material ratio, in other words, the amount of the added WO₃ material relative to the sum of the amount of the added amorphous carbon material and the amount of the added WO₃ material was 5% in weight%. In Example 1, the amount of the added WO₃ material was 0.05 g, and the amount of the added amorphous carbon material was 0.95 g. In Example 2, the WO₃ material ratio was 8% in weight%. In Example 2, the amount of the added WO₃ material was 0.08 g, and the amount of the added amorphous carbon material was 0.92 g.

In Example 3, a negative-electrode material was manufactured by the method using a ball mill by using amorphous carbon and tungsten trioxide. In Example 3, the WO₃ material ratio was 5% in weight%. Specifically, in Example 3, 0.05 g of the WO₃ material and 0.95 g of the amorphous carbon material were added to a ball mill (PULVERISETTE 7 manufactured by Fritsch) and rotated at 500 rpm for eight hours, thereby manufacturing the negative-electrode material.

In Example 4, a negative-electrode material was manufactured by the spray-dry method by using amorphous carbon and tungsten trioxide. In Example 4, the WO₃ material ratio was 5% in weight%. Specifically, in Example 4, 0.05 g of the WO₃ material was dissolved in ammonia solution at a concentration of 28%, and 0.95 g of the amorphous carbon material was added. Then, SDS was added to the ammonia solution so that the weight ratio of the SDS and the WO₃ material is 1:1, and 95 ml of pure water was added as well. Thereafter, the ammonia solution was agitated and then spray-dried by using a spray-dry device (B-290 manufactured by Buchi). Processing temperature at the spray-dry was 180°C, and the speed of spray-dry of the ammonia solution was 1 ml/min. Then, the specimen after spray-dried was heated at 700°C for two hours, thereby manufacturing the negative-electrode material.

In Example 5, a negative-electrode material was manufactured by the CVD method by using amorphous carbon and tungsten trioxide. Specifically, in Example 5, the WO₃ material was dissolved in ammonia solution at a concentration of 28%, and the ammonia solution was evaporated to dryness. Then, 1 g of the specimen evaporated to dryness and 50 mg of the amorphous carbon material was placed in a CVD furnace and chemical vapor deposition was performed with temperature set to each of 850°C and 600°C for two hours, thereby manufacturing the negative-electrode material.

In a comparative example, a negative-electrode material was manufactured by the solution method by using graphite and tungsten trioxide. In the comparative example, the amount of the added WO₃ material relative to the sum of the amount of the added graphite and the amount of the added WO₃ material was 5% in weight%. In the comparative example, the negative-electrode material was manufactured by a method same as that in Example 1 except that graphite was used in place of the amorphous carbon material.

### (Evaluation results of negative-electrode materials)

The negative-electrode materials manufactured by the methods in Examples 1 to 5 and the comparative example were evaluated. The evaluation was performed by capturing an image of each negative-electrode material with a SEM and observing whether the WO₃ material is provided on the surface of carbon. In addition, it was checked whether peaks of carbon and tungsten trioxide are observed with an XRD. Moreover, a negative electrode made of each negative-electrode material was manufactured, and capacity was measured as charging and discharging were repeated.

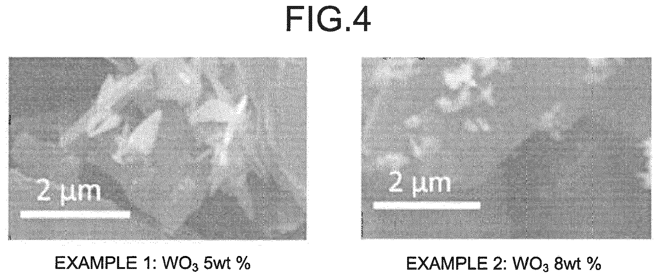

FIG. 4 illustrates images that capture the negative-electrode materials in examples of the present invention. FIG. 4 illustrates pictures obtained by capturing the negative-electrode materials of Examples 1 and 2 with the SEM. As illustrated in FIG. 4, it was confirmed with a SEM picture that WO₃ particles 32 were each provided on the surface of an amorphous carbon particle 30 in the negative-electrode material of Example 1. It was also confirmed with the SEM picture that WO₃ particles 32 were each provided on the surface of an amorphous carbon particle 30 in the negative-electrode material of Example 2. With the XRD, the peak of amorphous carbon and the peak of tungsten trioxide were confirmed in Examples 1 and 2.

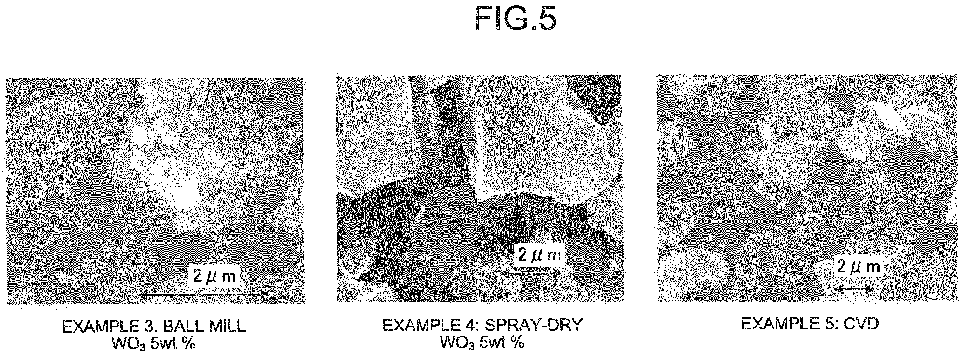

FIG. 5 illustrates images that capture the negative-electrode materials in examples of the present invention. FIG. 5 illustrates pictures that capture the negative-electrode materials of Examples 3 to 5 with the SEM. As illustrated in FIG. 5, it was confirmed with a SEM picture that WO₃ particles 32 were each provided on the surface of an amorphous carbon particle 30 in the negative-electrode material of Example 3. It was not significantly observed with the SEM picture that WO₃ particles 32 were each provided on the surface of an amorphous carbon particle 30 in the negative-electrode material of Example 4. It was also confirmed with the SEM picture that WO₃ particles 32 were each provided on the surface of an amorphous carbon particle 30 in the negative-electrode material of Example 5. With the XRD, the peak of amorphous carbon and the peak of tungsten trioxide were confirmed in Examples 3 and 5, and the peak of amorphous carbon was confirmed but the peak of tungsten trioxide was not clearly confirmed in Example 4. However, it was confirmed with a TEM picture that a layer of non-crystalline tungsten trioxide was provided on the surface of an amorphous carbon particle 30 in the negative-electrode material of Example 4.

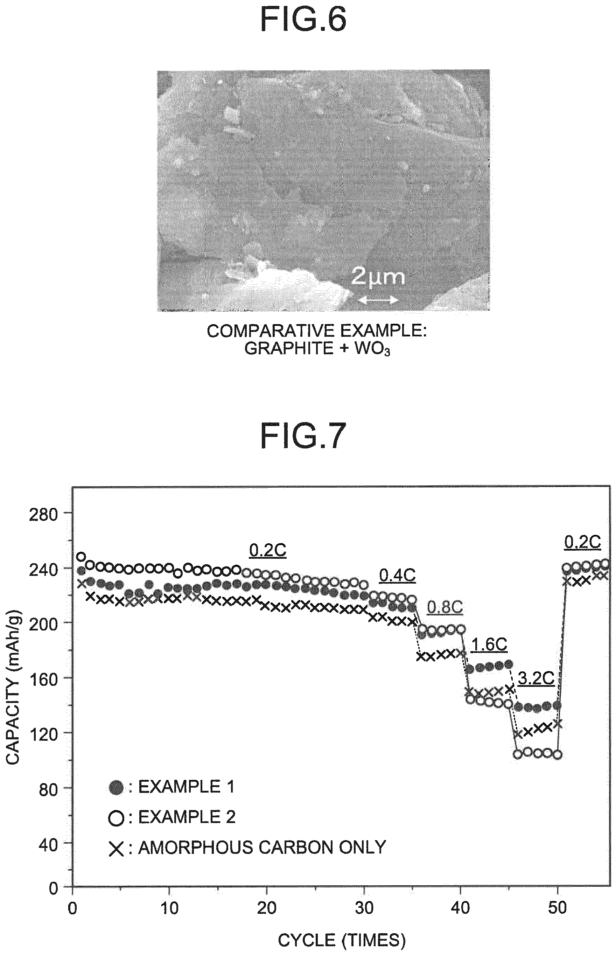

FIG. 6 illustrates an image that captures the negative-electrode material in the comparative example. FIG. 6 illustrates a picture that captures the negative-electrode material of the comparative example with the SEM. As illustrated in FIG. 6, it was confirmed with the SEM picture that a WO₃ particle 32 having a relatively large size was provided on the surface of graphite in the negative-electrode material of the comparative example.

Subsequently, capacity measurement results obtained when charging and discharging were repeated with negative electrodes made of the negative-electrode materials of the examples and the comparative example will be described. FIGS. 7 to 14 are diagrams illustrating capacity measurement results of the negative electrodes made of the negative-electrode materials of the present embodiment. FIG. 7 is a graph of capacity measurement results of the negative electrodes of Examples 1 and 2 for each cycle when a C rate was changed in each predetermined number of cycles. The C rate is the ratio of a discharging (charging) current value relative to the battery capacity (in this example, capacity of the negative electrode). The C rate of 1 C means that, for example, a negative electrode having a capacity of 10 Ah when the number of cycles is zero is discharged at the current of 10 A. One cycle means that the negative electrode is discharged at a set C rate until the capacity becomes zero, and then is charged to maximum capacity. In FIG. 7, the horizontal axis represents the number of cycles (the number of times of charging and discharging), and the vertical axis represents the capacity (mAh/g) of the negative electrode per 1 g when charged to maximum capacity after discharged. FIG. 7 plots the capacity at each cycle when discharging and charging at 0.2 C were repeated 30 times, discharging and charging at 0.4 C were repeated five times, discharging and charging at 0.8 C were repeated five times, discharging and charging at 1.6 C were repeated five times, discharging and charging at 3.2 C were repeated five times, and discharging and charging at 0.2 C were repeated five times.

FIG. 7 illustrates test results when the negative-electrode materials of Examples 1 and 2 were used, and a test result when a negative-electrode material containing only amorphous carbon, in other words, containing no tungsten trioxide was used. As illustrated in FIG. 7, it is likely that the capacity can be maintained higher when tungsten trioxide was provided on the surface of amorphous carbon as in Examples 1 and 2 than when no tungsten trioxide was provided. In addition, it can be understood that, when charging and discharging were performed at high current of 3.2 C, the capacity can be held highest in a case of Example 1, in other words, in a case in which the WO₃ material ratio is 5%.

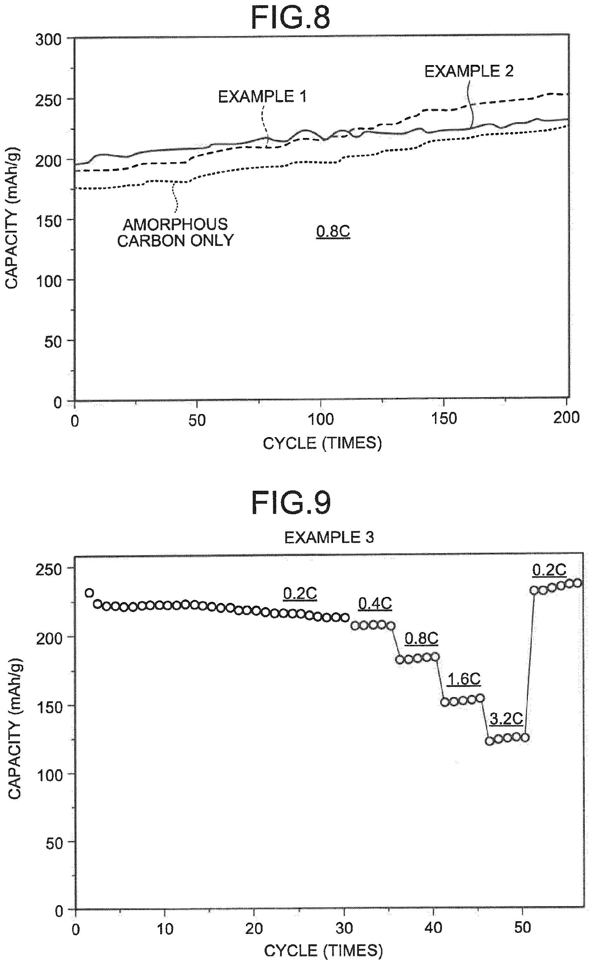

FIG. 8 is a graph of the capacity at each cycle when charging and discharging were repeated with the C rate fixed at 0.8 C in Examples 1 and 2. As illustrated in FIG. 8, it can be understood that the capacity can be held highest even when the number of cycles increases in a case of Example 1, in other words, in a case in which the WO₃ material ratio is 5%.

FIG. 9 is a graph of a measurement result of the negative-electrode capacity at each cycle when the C rate was changed in each predetermined number of cycles in a case in which the negative-electrode material of Example 3 was used. Change conditions of the C rate are same as those of FIG. 7. As illustrated in FIGS. 7 and 9, it can be understood that the capacity for 3.2 C can be held higher than in Example 3 when no tungsten trioxide was contained.

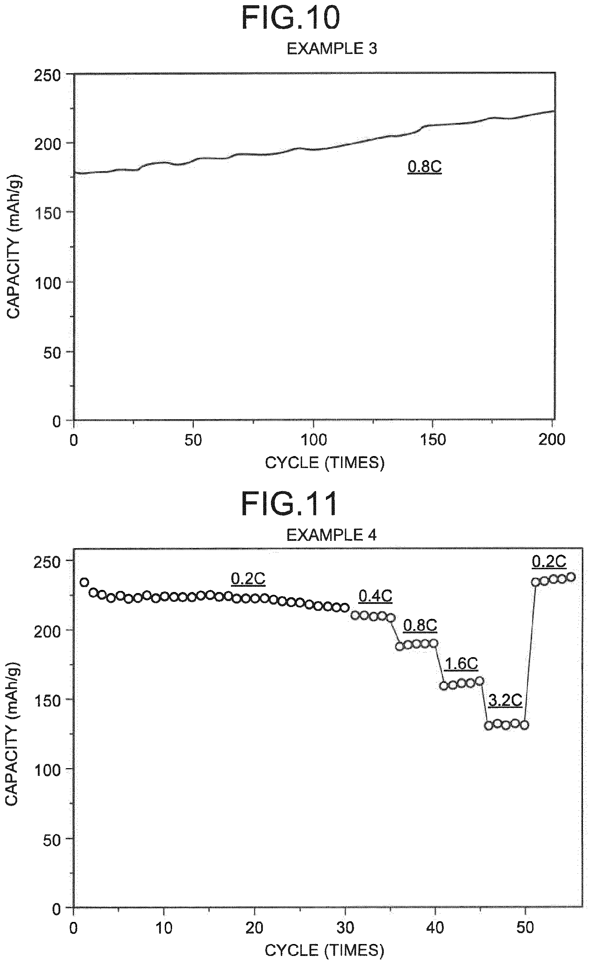

FIG. 10 is a graph of the capacity at each cycle when charging and discharging were repeated with the C rate fixed at 0.8 C in a case in which the negative-electrode material of Example 3 was used. As illustrated in FIGS. 8 and 10, it can be understood that the capacity when the number of cycles increases is not lower in Example 3 than when no tungsten trioxide was contained.

FIG. 11 is a graph of a measurement result of the negative-electrode capacity at each cycle when the C rate was changed in each predetermined number of cycles in a case in which the negative-electrode material of Example 4 was used. Change conditions of the C rate are same as those of FIG. 7. As illustrated in FIGS. 7 and 11, it can be understood that the capacity for 3.2 C can be held higher than in Example 4 when no tungsten trioxide was contained.

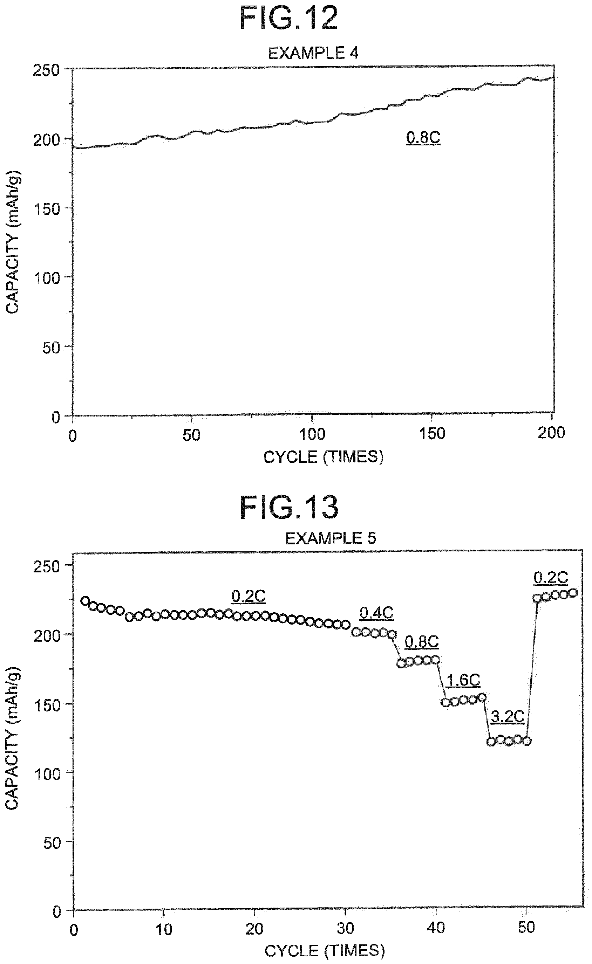

FIG. 12 is a graph of the capacity at each cycle when charging and discharging were repeated with the C rate fixed at 0.8 C in a case in which the negative-electrode material of Example 4 was used. As illustrated in FIGS. 8 and 12, it can be understood that the capacity when the number of cycles increases is not lower in Example 4 than when no tungsten trioxide was contained.

FIG. 13 is a graph of a measurement result of the negative-electrode capacity at each cycle when the C rate was changed in each predetermined number of cycles in a case in which the negative-electrode material of Example 5 was used. Change conditions of the C rate are same as those of FIG. 7. As illustrated in FIGS. 7 and 13, it can be understood that the capacity for 3.2 C is not lower in Example 5 than when no tungsten trioxide was contained.

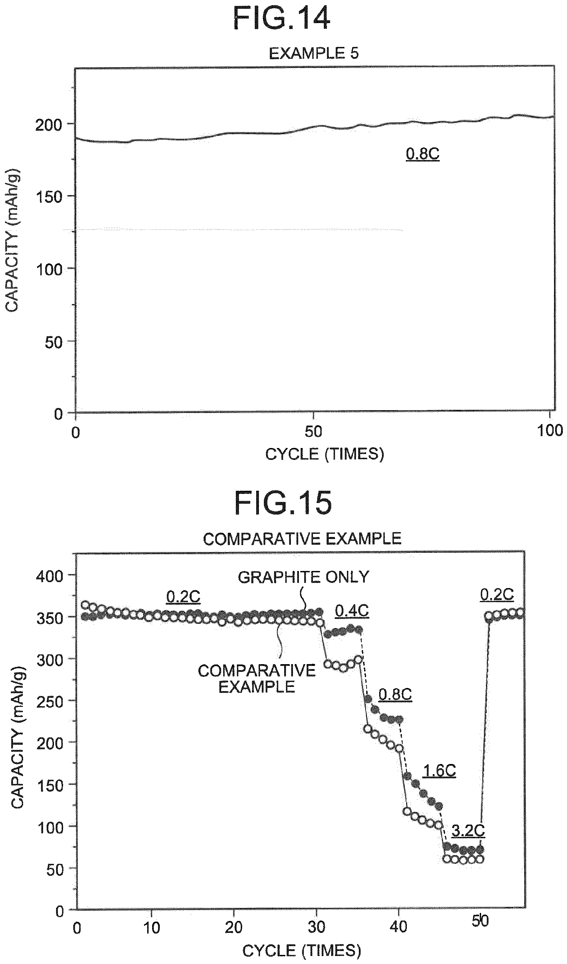

FIG. 14 is a graph of the capacity at each cycle when charging and discharging were repeated with the C rate fixed at 0.8 C in a case in which the negative-electrode material of Example 5 was used. As illustrated in FIGS. 8 and 14, it can be understood that the capacity when the number of cycles increases is not lower in Example 5 than when no tungsten trioxide was contained.

FIG. 15 is a graph of a measurement result of the negative-electrode capacity at each cycle when the C rate was changed in each predetermined number of cycles in a case in which the negative-electrode material of the comparative example was used. Change conditions of the C rate are same as those of FIG. 7. As illustrated in FIG. 15, it can be understood that the capacity for 3.2 C is lower in the comparative example than when graphite was contained but no tungsten trioxide was contained. In addition, as illustrated in FIGS. 7, 9, 11, 13, and 15, it can be understood that the capacity for 3.2 C is lower in the comparative example than in each example of the present embodiment. Thus, it can be understood that, in the comparative example, unlike the present embodiment, tungsten trioxide cannot be appropriately held on the surface of carbon and high capacity cannot be obtained in a case of charging and discharging at high current. In other words, it can be understood that, when amorphous carbon is used as in the examples of the present invention, tungsten trioxide can be appropriately held on the surface of amorphous carbon and high capacity can be obtained in a case of charging and discharging at high current, in particular.

Although the embodiment of the present invention is described above, the embodiment is not limited to the contents of the embodiment. Constituent components described above include those that can be easily thought of by the skilled person in the art, those identical in effect, and what is called equivalents. Moreover, constituent components described above may be combined as appropriate. Furthermore, it is possible to omit, replace, or change constituent components in various kinds of manners without departing from the scope of the embodiment described above. Reference Signs List

- 1: battery
- 14: negative electrode
- 22: negative-electrode material layer
- 30: amorphous carbon particle
- 32: WO₃ particle

## Claims

1. A negative-electrode material for a battery, the negative-electrode material comprising:
amorphous carbon; and
tungsten trioxide provided on the surface of the amorphous carbon.

2. The negative-electrode material according to claim 1, wherein the tungsten trioxide has a hexagonal crystal structure.

3. The negative-electrode material according to claim 1 or 2, wherein the tungsten trioxide has at least one of monoclinic and triclinic crystal structures.

4. The negative-electrode material according to any one of claims 1 to 3, wherein the amorphous carbon includes a functional group at the surface.

5. The negative-electrode material according to any one of claims 1 to 4, comprising no graphite.

6. A battery comprising:
the negative-electrode material according to any one of claims 1 to 5; and
a positive electrode material.

7. A method of manufacturing a negative-electrode material for a battery, the method comprising:
a dissolution step of dissolving tungsten trioxide by adding the tungsten trioxide to dissolution solution;
an addition step of adding amorphous carbon to the dissolution solution, in which the tungsten trioxide is dissolved, to produce additive solution; and
a negative-electrode-material production step of producing a negative-electrode material by removing a liquid component in the additive solution.

8. The negative-electrode-material manufacturing method according to claim 7, wherein the ratio of the amount of the added tungsten trioxide relative to the sum of the amount of the added tungsten trioxide and the amount of the added amorphous carbon is larger than 2 weight% and equal to or smaller than 8 weight%.

9. The negative-electrode-material manufacturing method according to claim 7 or 8, wherein the added tungsten trioxide has an average particle size of equal to or larger than 100 nm and equal to or smaller than 20 µm.

10. The negative-electrode-material manufacturing method according to any one of claims 7 to 9, wherein the negative-electrode-material production step includes
a dry step of drying the additive solution to produce a negative-electrode intermediate, and
a heating step of heating the negative-electrode intermediate.

11. The negative-electrode-material manufacturing method according to any one of claims 7 to 10, wherein alkaline solution is used as the dissolution solution at the dissolution step.

12. A battery manufacturing method comprising:
the negative-electrode-material manufacturing method according to any one of claims 7 to 11; and
a step of manufacturing a positive electrode material.
